# EUROPÄISCHE PATENTSCHRIFT

(11) **EP 1 070 284 B1**
(45) Veröffentlichungstag und Bekanntmachung des Hinweises auf die Patenterteilung: **17.07.2002**
(21) Anmeldenummer: 99919078.8
(22) Anmeldetag: 15.03.1999
(51) Int. Cl.: G06F 1/16

(54) **NOTEBOOK-RECHNER MIT LÖSBAR BEFESTIGTER TASTATUR**
NOTEBOOK COMPUTER WITH A DETACHABLY FIXED KEYBOARD
ORDINATEUR BLOC-NOTES AVEC CLAVIER FIXE DE MANIERE AMOVIBLE

(30) Priorität: 18.03.1998 DE 19811871
(43) Veröffentlichungstag der Anmeldung: 24.01.2001
(73) Patentinhaber: Fujitsu Siemens Computers GmbH, 81739 München (DE)
(72) Erfinder: KORNMAYER, Ingbert, D-86159 Augsburg (DE); SEIDEL, Bernd, D-08209 Auerbach (DE); SCHERER, August, D-86424 Dinkelscherben (DE); GEIGER, Jürgen, D-86836 Lagerlechfeld (DE); MAYER, Christoph, D-86159 Augsburg (DE)
(74) Vertreter: Epping Hermann & Fischer
(86) Internationale Anmeldenummer: DE9900716
(87) Internationale Veröffentlichungsnummer: WO9947992

(56) Entgegenhaltungen:
- US-A- 5 400 055
- US-A- 5 717 565
- PATENT ABSTRACTS OF JAPAN vol. 96, no. 8, 30. August 1996 (1996-08-30) & JP 08 087349 A (YAMANASHI), 2. April 1996 (1996-04-02)

## Beschreibung

Die Erfindung betrifft einen Notebook-Rechner gemäß den Merkmalen des Oberbegriffs des Anspruch 1.

Bei Notebook-Rechnern werden wegen der üblicherweise geringen Gehäuseabmessungen und der damit verbundenen gedrängten Bauweise besonders hohe Anforderungen an die Konstruktion des Gehäuses gestellt, insbesondere auch in Bezug auf die Wartungsfreundlichkeit.Einerseits soll das Gehäuse von allen Seiten gut zugänglich sein, andererseits wird dies durch die auf der Oberseite des Rechnergrundgehäuses vorgesehene Tastatur erheblich erschwert.

Aus US 5,400,055 A ist deshalb bereits ein Notebook-Rechner bekannt, bei dem die Tastatur in einen rahmenartigen Ausschnitt in die Deckfläche des Gehäuseoberteils eingebettet und über einen an der Tastaturunterseite vorgesehenen Steckverbinder an die System-Platine der Rechnereinheit anschließbar ist Dieser bekannte Notebook-Rechner ermöglicht wegen seines von der Tastatur abgedeckten relativ großen Ausschnitts in der Gehäusedeckfläche einen sehr leichten Zugang zu den darunter angeordneten Schaltungskomponenten, er ist aber auch nur bei gesteckter und im Ausschnitt eingebetteter Tastatur funktionsfähig.

Um das Arbeiten mit Notebook-Rechnern zu erleichtern, werden die Tastaturen zunehmend als selbständige Baueinheit ausgebildet, die je nach Bedarf vom Gehäuse getrennt und über Kabel oder frontseitige Stecker,gegebenenfalls auch über eine Infrarot-Schnittstelle in aus ergonomischer Sicht günstigem Abstand zur Anzeigeeinheit des Notebook-Rechners betrieben werden können. Dies erfordert jedoch einen Gehäuseaufbau mit weitgehend geschlossener Deckfläche, damit das Gehäuse auch bei abgenommener Tastatur noch ausreichend geschlossen bleibt, insbesondere auch im Hinblick auf die Einhaltung der EMV-Bestimmungen. Ein derartiger Aufbau geht aber wieder zu Lasten der Wartungsfreundlichkeit, wenn die auf der Deckfläche des Rechnergehäuses vorgesehene Steckvorrichtung für den Tastaturanschluß fest mit dem Gehäuse verbunden ist und das Gehäuse über die Oberseite geöffnet werden soll.

Der vorliegenden Erfindung liegt deshalb die Aufgabe zugrunde, die elektrische Ankopplung für die auf der weitgehend geschlossenen Deckfläche eines Notebook-Rechnergehäuses lösbar befestigte Tastatur so zu gestalten, daß die Wartungsfreundlichkeit des Gehäuses möglichst wenig beeinträchtigt wird.

Die Lösung dieser Aufgabe ergibt sich erfindungsgemäß durch die Merkmale des Anspruch 1. Vorteilhafte Weiterbildungen der Erfindung sind in den Unteransprüchen angegeben.

Im folgenden wird ein Ausführungsbeispiel der Erfindung anhand der Zeichnung näher erläutert. Dabei zeigen
Figur 1 ein Notebook-Rechnergehäuse im geschlossenen Zustand mit abnehmbarer Tastatur (nicht dargestellt),
Figur 2 das Notebook-Rechnergehäuse gemäß Figur 1 im geöffneten Zustand,
Figur 3 die Kontaktanordnung im Notebook-Rechnergehäuse gemäß Figur 1 und 2 in vergrößerter Darstellung und
Figur 4 das Notebook-Rechnergehäuse gemäß Figur 1 mit montierter Tastatur.

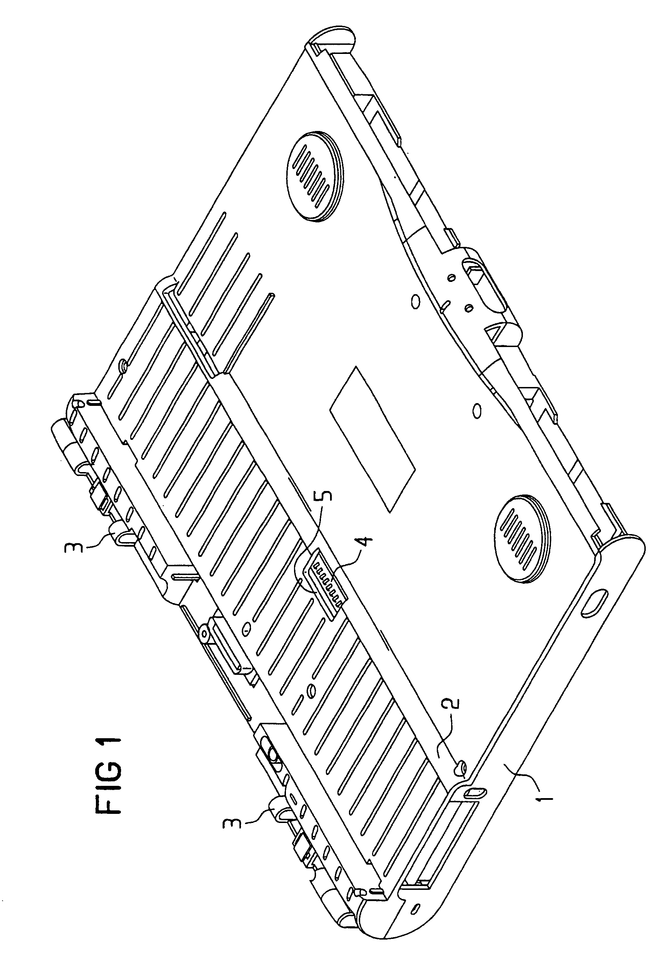

Die Figur 1 zeigt ein aus einer Unterschale 1 und einer Oberschale 2 bestehendes Notebook-Rechnergehäuse, an dessen Deckfläche eine in der Figur nicht dargestellte Tastatur lösbar befestigt werden kann. Die Oberschale 2 des Gehäuses ist an der hinteren Längskante schwenkbar an der Unterschale 1 befestigt. Längs dieser hinteren Kante ist außerdem ein Scharniergelenk 3 vorgesehen, an dem ein ebenfalls vom Gehäuse lösbarer Flachbildschirm (in der Figur nicht dargestellt) schwenkbar gelagert ist. Der Flachbildschirm befindet sich in einem Deckelgehäuse, das im zugeklappten Zustand auf der Tastatur aufliegt. Zur elektrischen Ankopplung der Tastatur ist auf der Deckfläche der Oberschale 2 eine nach aussen gerichtete mehrpolige Kontaktanordnung 4 vorgesehen, die innerhalb einer in der Deckfläche der Oberschale 2 vorgesehenen Aussparung 5 angeordnet ist. Die Tastatur weist an ihrer Unterseite eine entsprechende Gegenkontaktanordnung auf, die bei am Notebook befestigter Tastatur auf der Kontaktanordnung 4 aufliegt.

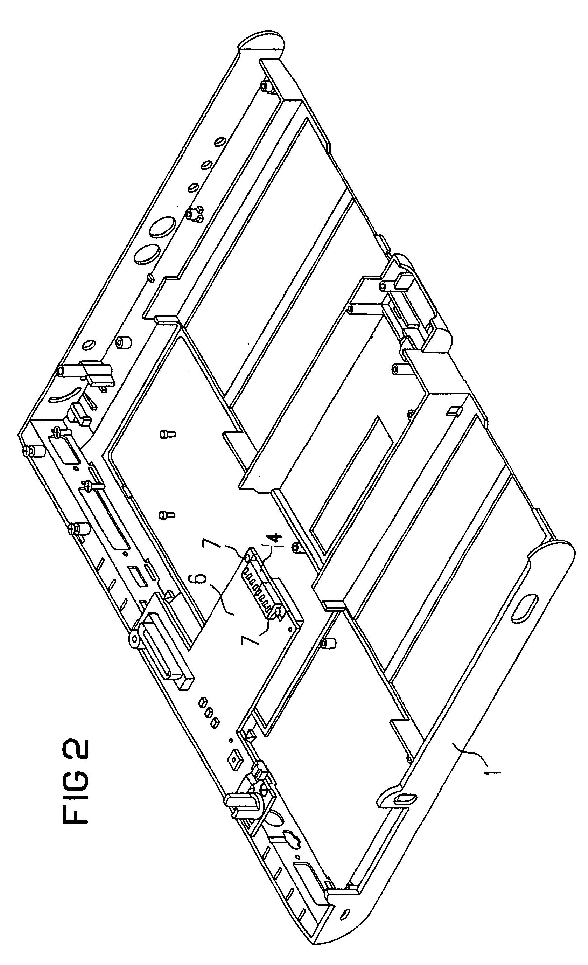

Wie die Figur 2 zeigt, ist die Kontaktanordnung 4 nicht an der Oberschale 2, sondern an einer Baugruppe 6 innerhalb des Rechnergehäuses befestigt. Dies hat den Vorteil, daß für den Fall, daß das Rechnergehäuse, z.B. zu Wartungszwecken, geöffnet werden muß, die Oberschale 2 unabhängig von der Kontaktanordnung 4 in einfacher Weise hochgeklappt werden kann.

Zu beiden Seiten der Kontaktanordnung 4 ist je ein zusätzliches Kontaktelement 7 vorgesehen, das auf Massepotential liegt und bei geschlossener Oberschale 2 federnd an deren Innenseite anliegt. Auf diese Weise wird in einfacher Weise ein zusätzlicher Massekontakt von der Oberschale 2 zum Gehäuse und den dort befindlichen Baugruppen hergestellt.

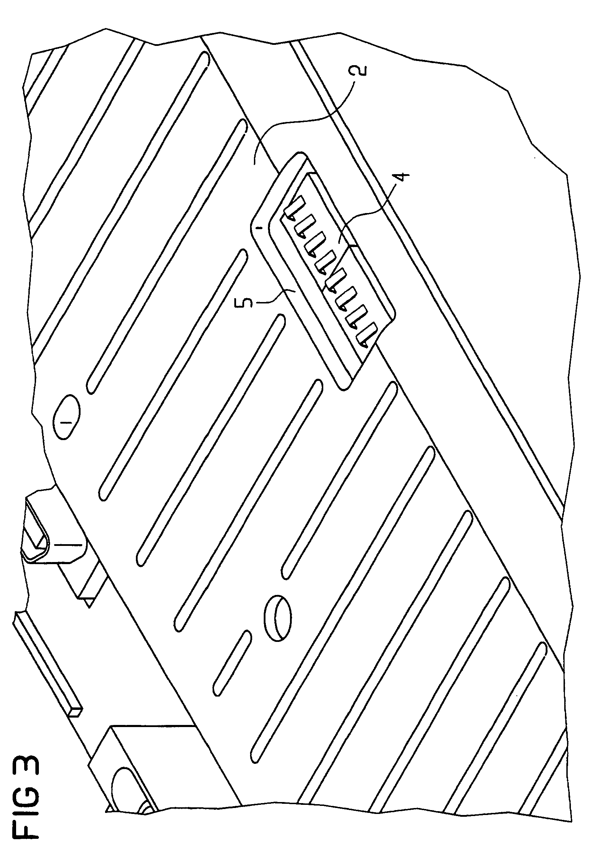

Die Figur 3 zeigt die innerhalb der Aussparung 5 eingebettete Kontaktanordnung 4 in einem vergrößert dargestellten Ausschnitt der Gehäuseoberschale. Diese Kontaktanordnung 4 besteht aus mehreren parallel angeordneten streifenförmigen Kontaktfedern, die einseitig eingespannt und dachförmig abgewinkelt sind und auf denen sich die Gegenkontaktanordnung der Tastatur federnd abstützt.

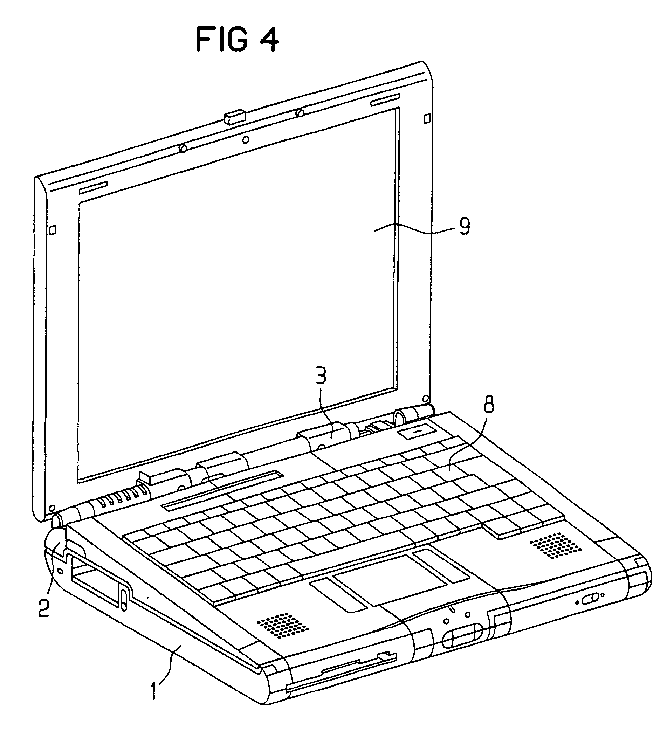

Die Figur 4 zeigt das Notebook-Rechnergehäuse mit aufgesetzter Tastatur 8 und dem am Scharniergelenk 3 drehbar gelagerten Flachbildschirm 9.

## Patentansprüche

1. Notebook-Rechner mit einem aus Unter- und Oberschale bestehenden Grundgehäuse, einem am Grundgehäuse schwenkbar gelagerten Deckelgehäuse mit einer an dessen Innenseite angeordneter Anzeigeeinheit und einer an der Oberschale des Grundgehäuses lösbar befestigten Tastatur, **dadurch gekennzeichnet, daß** in der eine weitgehend geschlossene Deckfläche aufweisenden Oberschale (2) des Grundgehäuses eine Aussparung (5) vorgesehen ist, zur Aufnahme einer nach außen gerichteten mehrpoligen Kontaktanordnung (4), die an einer Baugruppe (6) innerhalb des Grundgehäuses befestigt ist und als Anschluß für die eine entsprechende Gegenkontaktanordnung aufweisende Tastatur vorgesehen ist.

2. Notebook-Rechner nach Anspruch 1, **dadurch gekennzeichnet, daß** die Kontaktanordnung (4) aus mehreren parallel angeordneten streifenförmigen Kontaktfedern besteht, die als Auflage für die Gegenkontaktanordnung der Tastatur dienen.

3. Notebook-Rechner nach Anspruch 2, **dadurch gekennzeichnet, daß** die Kontaktfedern einseitig eingespannt sind.

4. Notebook-Rechner nach Anspruch 3, **dadurch gekennzeichnet, daß** die Kontaktfedern dachartig abgewinkelt sind, wobei sich die freien Enden federnd auf einer Unterlage abstützen.

5. Notebook-Rechner nach einem der vorhergehenden Ansprüche, **dadurch gekennzeichnet, daß** wenigstens an einer Seite der Kontaktanordnung (4) ein zusätzliches Kontaktelement (7) vorgesehen ist, das auf Massepotential liegt und bei geschlossener Oberschale (2) federnd an deren Innenseite anliegt.

## Claims

1. Notebook computer having a basic housing comprising a bottom shell and a top shell, a lid housing which is mounted on the basic housing so as to be pivotable and has a display unit arranged on its inside, and a keyboard which is detachably mounted on the top shell of the basic housing, **characterized in that** the basic housing's top shell (2), which has a largely closed top surface, contains a cutout (5) for holding an outwardly directed multipole contact arrangement (4) which is secured on an assembly (6) inside the basic housing and is provided as connection for the keyboard, which has a corresponding mating contact arrangement.

2. Notebook computer according to Claim 1, **characterized in that** the contact arrangement (4) comprises a plurality of strip-shaped contact springs which are arranged in parallel and serve as a support for the keyboard's mating contact arrangement.

3. Notebook computer according to Claim 2, **characterized in that** the contact springs are clamped at one end.

4. Notebook computer according to Claim 3, **characterized in that** the contact springs are angled in the manner of a roof, with the free ends being supported resiliently on a base support.

5. Notebook computer according to one of the preceding claims, **characterized in that** at least one side of the contact arrangement (4) is provided with an additional contact element (7) which is at ground potential and bears resiliently against the inside of the top shell (2) when it is closed.

## Revendications

1. Ordinateur bloc-notes comportant un boîtier de base constitué d'une coquille inférieure et d'une coquille supérieure, un boîtier de couvercle, monté basculant sur le boîtier de base et comportant une unité d'affichage disposée sur sa face intérieure, et un clavier, fixé de manière amovible à la coquille supérieure du boîtier de base, **caractérisé en ce qu'**il est prévu, dans la coquille (2) supérieure du boîtier de base présentant une surface de recouvrement dans une grande mesure fermée, un évidement (5) pour la réception d'un dispositif (4) de contact multipolaire qui est dirigé vers l'extérieur, qui est fixé à un module (6) à l'intérieur du boîtier de base et qui est prévu comme borne pour le clavier comportant un dispositif de contact antagoniste correspondant.

2. Ordinateur bloc-notes suivant la revendication 1, **caractérisé en ce que** le dispositif (4) de contact est constitué de plusieurs ressorts de contact en forme de bande, qui sont disposés parallèlement et qui servent de support pour le dispositif de contact antagoniste du clavier.

3. Ordinateur bloc-notes suivant la revendication 2, **caractérisé en ce que** les ressorts de contact sont fixés d'un seul côté.

4. Ordinateur bloc-notes suivant la revendication 3, **caractérisé en ce que** les ressorts de contact sont repliés à la façon d'un toit, les extrémités libres prenant appui de manière élastique sur un support.

5. Ordinateur bloc-notes suivant l'une des revendications précédentes, **caractérisé en ce qu'**il est prévu, au moins sur une face du dispositif (4) de contact, un élément (7) de contact supplémentaire qui est au potentiel de masse et qui, lorsque la coquille (2) supérieure est fermée, s'applique de manière élastique à sa face intérieure.
